# EUROPEAN PATENT APPLICATION

(11) **EP 3 901 018 A1**
(43) Date of publication of application: **27.10.2021**
(21) Application number: 20196357.6
(22) Date of filing: 16.09.2020
(51) Int. Cl.: B62K 5/027, B62K 5/05, B62K 5/08, B62K 5/10

(54) **THREE-WHEELED VEHICLE**

(30) Priority: 22.04.2020 TW 109204776 U
(71) Applicant: Kwang Yang Motor Co., Ltd., Kaohsiung City 80794 (TW)
(72) Inventor: HUANG, Cheng-Hung, 830 KAOHSIUNG CITY (TW); TSAI, Feng-Chih, 830 KAOHSIUNG CITY (TW); LIANG, Chiu-Hui, 807 KAOHSIUNG CITY (TW)
(74) Representative: Regimbeau

(57) **Abstract**

A three-wheeled vehicle (100) includes a vehicle body frame (2), a power unit (3) disposed on the vehicle body frame (2), and a swing arm unit (4) connected to the vehicle body frame (2). A wheel axle unit (5) includes two spaced-apart front wheels (51) pivotally connected to a front end of the vehicle body frame (2), and a rear wheel (52) pivotally connected to the swing arm unit (4). A storage unit (6) is disposed on the vehicle body frame (2) above the power unit (3) . A fuel tank (7) is connected to the power unit (3) and includes a front wall (71) adjacent to the storage unit (6), and a rear wall (72) opposite to the front wall (71).

## Description

The disclosure relates to a means of transportation, and more particularly to a vehicle.

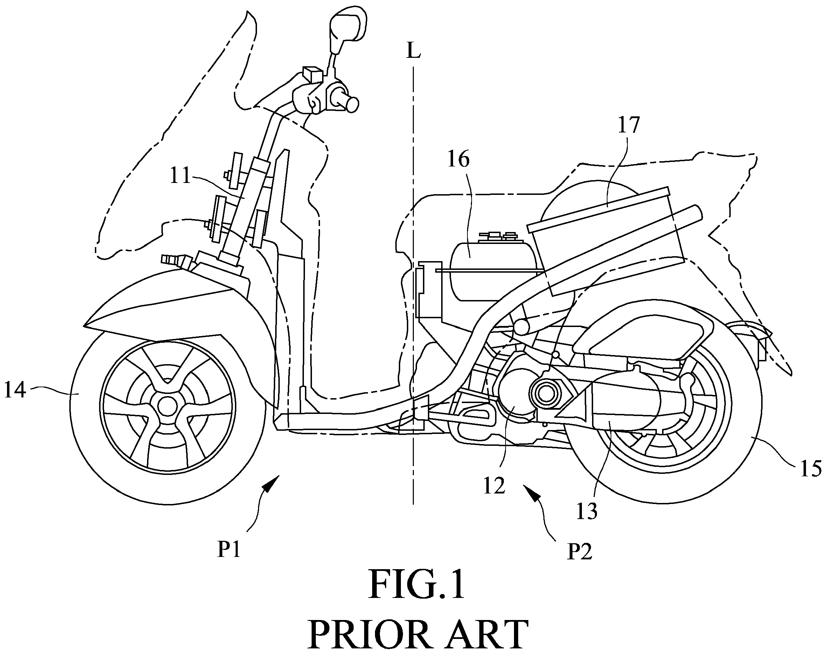

Referring to FIG. 1, a conventional three-wheeled vehicle includes a vehicle body frame 11 made of metal, an engine 12 fixedly disposed on the vehicle body frame 11, a swing arm 13 connected to the vehicle body frame 11 and adjacent to the engine 12, two spaced-apart front wheels 14 (only one is visible in FIG. 1) pivotally connected to the vehicle body frame 11, a rear wheel 15 pivotally connected to the swing arm 14 and drivable by the engine 12 to rotate, a fuel tank 16 disposed on the vehicle body frame 11 and located above the engine 12, and a storage box 17 disposed on the vehicle body frame 11 and located rearwardly of the fuel tank 16. A vertical bisecting line (L) is defined as dividing the vehicle body frame 11 into a front half (P1) and a rear half (P2). The engine 12, the swing arm 13, the fuel tank 16 and the storage box 17 are all disposed in the rear half (P2). The storage box 17 is located above the rear wheel 15.

Due to the need to install the two front wheels 14, a wheel axle structure of the front half (P1) of the vehicle body frame 11 is more complicated than that of the rear half (P2), and has more components, so that the weight of the front half (P1) is greater than that of the rear half (P2). Further, the fuel tank 16 and the engine 12 are disposed closer to the vertical bisecting line (L), so that the weight of the fuel tank 16 and the weight of the engine 12 are concentrated in a central area of the conventional three-wheeled vehicle. As such, the weight of the front half (P1) and the weight of the front wheels 14 cannot be reduced, thereby causing imbalance in weight between the front half (P1) and the rear half (P2) of the vehicle body frame 11. Not only is the driving control affected, but also there is the danger of tipping forward or even overturning due to the weight imbalance between the front half (P1) and the rear half (P2) of the three-wheeled vehicle when the brake thereof is operated. Moreover, because the fuel tank 16 is disposed closer to the engine 12, in order to avoid heat damage and danger, an additional thermal insulation foam must be provided, thereby increasing the cost of the conventional three-wheeled vehicle.

Therefore, an object of the present disclosure is to provide a three-wheeled vehicle that can alleviate at least one of the drawbacks of the prior art.

According to the present disclosure, a three-wheeled vehicle includes a vehicle body frame, a power unit, a swing arm unit, a wheel axle unit, a storage unit and a fuel tank. The power unit is disposed on the vehicle body frame, and includes a cylinder block, and a crankcase connected to the cylinder block. The crankcase has a crankshaft rotatably mounted therein for rotation about a crankshaft axis.

The swing arm unit is connected to the vehicle body frame, is located rearwardly of the crankcase, and is swingable relative to the vehicle body frame about a swing axis that passes through a junction of the swing arm unit and the vehicle body frame. The wheel axle unit includes two spaced-apart front wheels pivotally connected to a front end of the vehicle body frame, and a rear wheel pivotally connected to the swing arm unit and drivable by the power unit to rotate about a rear wheel axis. The rear wheel axis and the crankshaft axis are arranged horizontally.

The storage unit is disposed on the vehicle body frame, is located above the power unit, and defines a storage space. The fuel tank is connected to the power unit and includes a front wall adjacent to the storage unit, and a rear wall opposite to the front wall. A central plane is defined as having the same distance from each of the front and rear walls, and is located between the crankshaft axis and the rear wheel axis.

Other features and advantages of the present disclosure will become apparent in the following detailed description of the embodiment with reference to the accompanying drawings, of which:
FIG. 1 is a schematic side view of a conventional three-wheeled vehicle;
FIG. 2 is a schematic side view of a three-wheeled vehicle according to an embodiment of the present disclosure; and
FIG. 3 is a schematic top view of the embodiment.

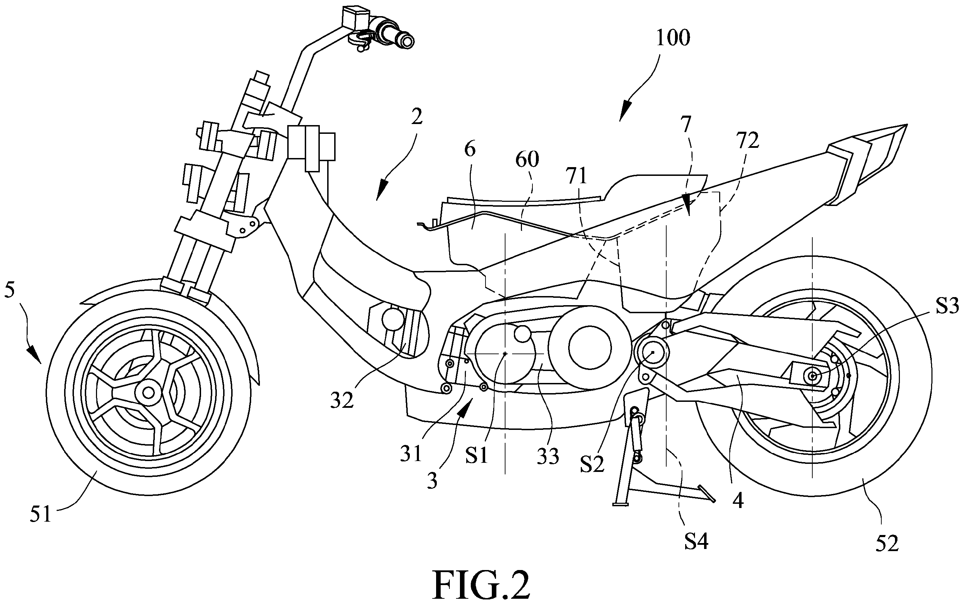

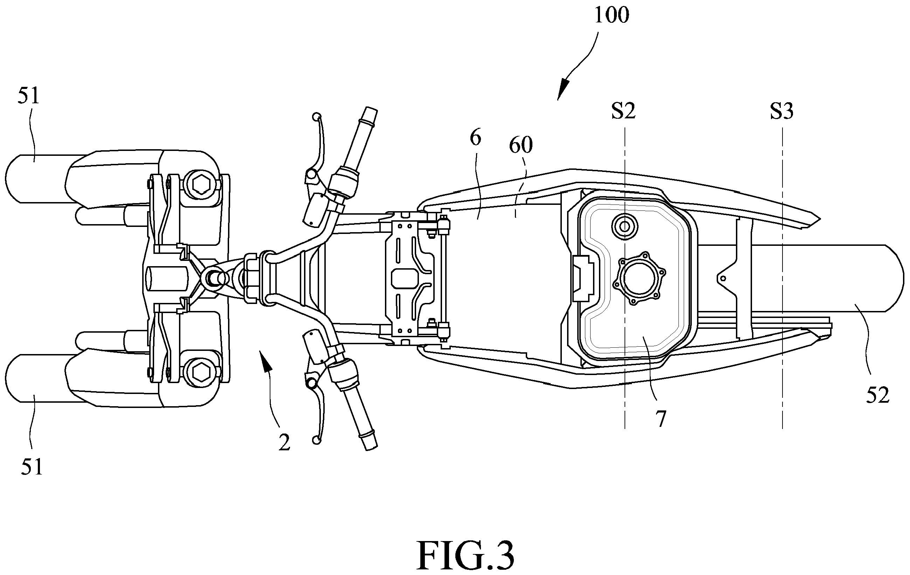

Referring to FIGS. 2 and 3, a three-wheeled vehicle 100 according to an embodiment of the present disclosure includes a vehicle body frame 2, a power unit 3, a swing arm unit 4, a wheel axle unit 5, a storage unit 6 and a fuel tank 7.

The vehicle body frame 2 extends along a front-rear direction, and is made of metal which has strong material strength and high durability. Through this, the service life of the vehicle body frame 2 can be increased.

The power unit 3 of this embodiment is a stationary engine fixed to the vehicle body frame 2, and includes a cylinder block 31 arranged horizontally relative to the ground, a cylinder head 32 connected to a front end of the cylinder block 31 so as to be located forwardly of the cylinder block 31, and a crankcase 33 connected to a rear end of the cylinder block 31 and having a crankshaft (not shown) rotatably mounted therein for rotation about a crankshaft axis (S1). Since the crankshaft is provided only for relative position with other components, and the position thereof can be determined according to the crankshaft axis (S1), the crankshaft is not shown in the drawings. A front end of the cylinder head 32 is located on a front side of the crankshaft axis (S1). The cylinder block 31, the cylinder head 32 and the crankcase 33 are disposed horizontally, so that an area of the vehicle body frame 2 located above the power unit 3 is wide and spacious for installation of other devices.

The swing arm unit 4 is pivotally connected to the vehicle body frame 2 and extends rearwardly. The swing arm unit 4 is located rearwardly of the crankcase 33, and is swingable up and down relative to the vehicle body frame 2 about a swing axis (S2) that passes through a junction of the swing arm unit 4 and the vehicle body frame 2.

The wheel axle unit 5 includes two spaced-apart front wheels 51 pivotally connected to a front end of the vehicle body frame 2, and a rear wheel 52 pivotally connected to the swing arm unit 4 and drivable by the power unit 3 to rotate about a rear wheel axis (S3). The rear wheel axis (S3) and the crankshaft axis (S1) are arranged horizontally such that the crankcase 33 is located in a lower half of the vehicle body frame 2, and is parallel to the swing arm unit 4. In particular, because the vehicle body frame 2 needs to be mounted with the two front wheels 51 so that a front half of the vehicle body frame 2 has a more complicated frame structure than a rear half thereof and has more components, the weight of the front half of the vehicle body frame 2 with the front wheels 51 is greater than the weight of the rear half of the vehicle body frame 2 with the rear wheel 52.

In this embodiment, the storage unit 6 is specifically a storage box located above the crankcase 33 and defining a storage space 60 for storing things. A rear portion of the storage unit 5 is located between the crankshaft axis (S1) and the rear wheel axis (S3) for increasing the weight of the rear half of the vehicle body frame 2.

The fuel tank 7 is disposed on the vehicle body frame 2, and is located rearwardly of the storage unit 6. Particularly, the fuel tank 7 is located above the crankshaft axis (S1) and the swing axis (S2), and includes a front wall 71 adjacent to the storage unit 6, and a rear wall 72 opposite to the front wall 71 and located between the swing axis (S2) and the rear wheel axis (S3). A central plane (S4) is defined as having the same distance from each of the front wall 71 and the rear wall 72, and serves as a reference for explaining the position of the fuel tank 7 relative to the other components. The central plane (S4) is located between the crankshaft axis (S1) and the rear wheel axis (S3). Because the fuel tank 7 is disposed in the rear half of the vehicle body frame 2, the fuel tank 7 together with the storage unit 6 can increase the weight of the rear half of the vehicle body frame 2 with the rear wheel 52 to match the weight of the front half of the vehicle body frame 2 with the front wheels 51, thereby balancing the front and rear halves of the vehicle body frame 2. Moreover, since the fuel tank 7 is relatively far from the power unit 3, heat generated by the operation of the power unit 3 is less likely to affect the fuel stored in the fuel tank 7, so that the occurrence of heat damage can be reduced, thereby avoiding danger.

In this embodiment, because the fuel tank 7 is located in the rear half of the vehicle body frame 2 and together with the storage unit 6 can increase the weight of the rear half of the vehicle body frame 2, the weight of the rear half of the vehicle body frame 2 with the rear wheel 52 can balance with the weight of the front half of the vehicle body frame 2 with the two front wheels 51. In terms of actual riding, the three-wheeled vehicle 100 of this embodiment not only has good driving control, but also can be stably decelerated to a stop so as to avoid the situation of tipping forward or overturning when the brake is operated. Further, because the fuel tank 7 is far from the power unit 3, the possibility of heat damage can be significantly reduced, thereby avoiding danger. As such, there is no need to install additional thermal insulation foam, so that the costs can be greatly reduced.

Additionally, because the cylinder block 31 and the cylinder head 32 are disposed horizontally relative to the ground, the available space in an upper half of the vehicle body frame 2 and above the crankcase 33 can be increased which is suitable for installing the storage unit 6 with a greater height. Not only is the storage space 60 can be expanded, or the distance between front and rear edges of the storage unit 6 can be reduced without affecting the size of the storage space 60, the distance between the front wheels 51 and the rear wheel 52 can be shortened to reduce the size of the entire vehicle 100.

In summary, in the three-wheeled vehicle 100 of this disclosure, because the fuel tank 7 is far from the power unit 3 and is disposed at a relatively rearward position of the vehicle body frame 2, not only heat damage and danger can be avoided, but also the weights of the front and rear halves of the entire three-wheeled vehicle 100 can be balanced to optimize driving control and stability and to ensure that the entire vehicle 100 will not tip forward or overturn when the brake of the vehicle 100 is operated, thereby avoiding accidents and maintaining the safety of the driver.

Further, the storage unit 6 is disposed above the crankcase 33 and is located in the rear half of the vehicle body frame 2 to increase the weight of the rear half of the vehicle 100.

Moreover, because the crankcase 33, the swing arm unit 4 and the storage unit 6 are disposed on the rear half of the vehicle 100, and the fuel tank 7 is disposed above the crankcase 33 and the swing arm unit 4 and is located at the rear side of the storage unit 6, the fuel tank 7 is limited to be located more rearward of the vehicle 100, thereby increasing the weight of the rear half of the vehicle 100 to balance the weights of the front and rear halves of the vehicle 100 and optimize the driving control.

With the power unit 3 being a stationary engine, when driving the vehicle 100, the power unit 3 will not swing relative to the vehicle body frame 2 and affect the balance of the vehicle 100, so that the driving stability is increased.

Therefore, the object of this disclosure can indeed be achieved.

## Claims

1. A three-wheeled vehicle (100) comprising:
a vehicle body frame (2);
a power unit (3) disposed on said vehicle body frame (2) and including a cylinder block (31), and a crankcase (33) connected to said cylinder block (31), said crankcase (33) having a crankshaft rotatably mounted therein for rotation about a crankshaft axis (S1);
a swing arm unit (4) connected to said vehicle body frame (2), located rearwardly of said crankcase (33), and swingable relative to said vehicle body frame (2) about a swing axis (S2) that passes through a junction of said swing arm unit (4) and said vehicle body frame (2);
a wheel axle unit (5) including two spaced-apart front wheels (51) pivotally connected to a front end of said vehicle body frame (2), and a rear wheel (52) pivotally connected to said swing arm unit (4) and drivable by said power unit (3) to rotate about a rear wheel axis (S3), said rear wheel axis (S3) and said crankshaft axis (S1) being arranged horizontally;
a storage unit (6) disposed on said vehicle body frame (2), located above said power unit (3), and defining a storage space (60); and
a fuel tank (7) connected to said power unit (3) and including a front wall (71) adjacent to said storage unit (6), and a rear wall (72) opposite to said front wall (71), a central plane (S4) being defined as having the same distance from each of said front wall (71) and said rear wall (72), said central plane (S4) being located between said crankshaft axis (S1) and said rear wheel axis (S3).

2. The three-wheeled vehicle as claimed in Claim 1, wherein a rear portion of said storage unit (5) is located between said crankshaft axis (S1) and said rear wheel axis (S3).

3. The three-wheeled vehicle as claimed in Claim 1, wherein said fuel tank (7) is located above said swing axis (S2).

4. The three-wheeled vehicle as claimed in Claim 1, wherein said fuel tank (7) is located above said crankshaft axis (S1).

5. The three-wheeled vehicle as claimed in Claim 1, wherein said fuel tank (7) is located rearwardly of said storage unit (6).

6. The three-wheeled vehicle as claimed in any one of Claims 1 to 5, wherein said power unit (3) is fixed to said vehicle body frame (2).

7. The three-wheeled vehicle as claimed in any one of Claims 1 to 5, wherein said power unit (3) further includes a cylinder head (32) located forwardly of said cylinder block (31) which is arranged horizontally, a front end of said cylinder head (32) being located on a front side of said crankshaft axis (S1) .
